# EUROPÄISCHE PATENTSCHRIFT

(11) **EP 0 714 922 B1**
(45) Veröffentlichungstag und Bekanntmachung des Hinweises auf die Patenterteilung: **24.03.1999**
(21) Anmeldenummer: 95118421.7
(22) Anmeldetag: 23.11.1995
(51) Int. Cl.: C08F 265/04, D21H 19/58

(54) **Alkenylnitril enthaltende Bindemittel für Papierstreichmassen**
Binder containing an alkene nitrile for paper coating compositions
Liant contenant un nitrile d'alcène pour compositions de couchage du papier

(30) Priorität: 01.12.1994 DE 4442729
(43) Veröffentlichungstag der Anmeldung: 05.06.1996
(73) Patentinhaber: BASF AKTIENGESELLSCHAFT, 67056 Ludwigshafen (DE)
(72) Erfinder: Schuler, Bernhard, Dr., D-68199 Mannheim (DE); Schwarzenbach, Elmar, Dr., D-67354 Römerberg (DE); Hartmann, Jürgen, Dr., D-67227 Frankenthal (DE); Tschang, Chung-Ji, Dr., D-67098 Bad Dürkheim (DE)

(56) Entgegenhaltungen:
- EP-A- 0 089 086
- DE-A- 2 149 282
- US-A- 3 745 196

## Beschreibung

Die Erfindung betrifft Papierstreichmassen, enthaltend ein Emulsionscopolymerisat, insgesamt aufgebaut aus
0 bis 60 Gew.-% eines Vinylaromaten,
40 bis 95 Gew.-% eines C₁- bis C₁₀-Alkyl(meth)acrylats,
5 bis 40 Gew.-% eines Alkenylnitrils,
0 bis 10 Gew.-% einer ethylenisch ungesättigten Säure und
0 bis 20 Gew.-% weiterer Monomere
als Bindemittel, wobei es sich bei dem Emulsionscopolymerisat um ein Gemisch aus mindestens zwei Polymeren oder um ein aus mindestens zwei Stufen aufgebautes Emulsionscopolymerisat handelt, wobei ein Polymer bzw. eine Stufe, dessen bzw. deren Anteil am Emulsionscopolymerisat 10 bis 75 Gew.-% beträgt, mindestens 90 Gew.-% des gesamten Alkenylnitrils (Alkenylnitril-reiches Polymer bzw. Stufe) enthält.

Bindemittel für Papierstreichmassen werden eingesetzt, um die Pigmente untereinander und zum Papier hin zu fixieren. Die Bindekraft sollte möglichst hoch sein. Daneben haben die Bindemittel aber auch einen starken Einfluß auf die übrigen Papiereigenschaften wie Glanz, Druckglanz und Bedruckbarkeit. Die Bindemittel sind üblicherweise Emulsionscopolymerisate. Aufgrund der verwendeten Monomere unterscheidet man sie in Styrol/Butadien-Bindemittel (S/B-Bindemittel) und Styrol/Acrylat-Bindemittel (S/A-Bindemittel). Die Eigenschaften der beiden Bindemittel im Papier unterscheiden sich stark. Die molekulare Struktur der S/B-Bindemittel weicht charakteristisch von der eines S/A-Bindemittels ab, da die konjugierte Doppelbindung des Butadiens zu starken Verzweigungen und Vernetzungen der Polymerkette führt. Charakterisiert wird der Anteil der verzweigten und vernetzten Strukturen durch den Gelgehalt: die Menge des getrockneten Polymers, das in einem Lösungsmittel unlöslich ist. Der molekulare Aufbau hat einen bedeutenden Einfluß auf die Bindekraft der Dispersion im Papierstrich. Beispielsweise kann bei S/B-Bindern der Gelgehalt und damit die Bindekraft durch Zusatz eines Reglers in weiten Grenzen variiert werden. Nachteilig an den butadienhaltigen Bindemitteln ist ihre Vergilbungsneigung.

S/A-Bindemittel enthalten Acrylate anstelle des Butadiens. Aufgrund ihres einfach ungesättigten Charakters können sie keine Verzweigung bzw. Vernetzung über Doppelbindungen eingehen. Sie besitzen daher einen grundsätzlich anderen Polymeraufbau. Im Gegensatz zu den S/B-Bindemitteln sind S/A-Bindemittel vergilbungsfrei und verleihen im Regelfall dem Papierstrich eine bessere Bedruckbarkeit.

Beim Druckvorgang in einer Offsetdruckmaschine wirken wegen der hohen Viskosität der Druckfarbe starke Zugkräfte auf den Papierstrich. Der Widerstand, den der Papierstrich gegen diese Kräfte leistet, wird als Rupffestigkeit bezeichnet. Man unterscheidet die Trockenrupffestigkeit und die Naßrupffestigkeit. Die Naßrupffestigkeit hat insbesondere beim wäßrigen Offsetdruck Bedeutung, da im zweiten Druckwerk die Druckfarbe auf ein wasserfeuchtes Papier trifft, und der Papierstrich unter diesen Bedingungen eine ausreichende Bindekraft aufweisen muß.

Aus der EP-A-204 550 sind Styrol/Butadien-Bindemittel und ihre Verwendung in Papierstreichmassen bekannt. Die Bindemittel haben einen Kern/Schale-Aufbau und enthalten in der Schale Acrylnitril.

Aus der EP-A-429 207 sind stufenförmig aufgebaute Emulsionscopolymerisate bekannt, welche Acrylnitril in der 1. Stufe enthalten. Papierstreichmassen sind nicht erwähnt.

Aus der DE-A-2 149 282 und EP-426 391 sind Styrol/Acrylat-Bindemittel, welche u.a. auch Acrylnitril enthalten können, und ihre Verwendung in Papierstreichmassen bekannt.

Aus US-A- 3 745 196 sind zweistufig aufgebaute Emulsionspolymerisate mit unterschiedlichem Acrylnitrilgehalt in den Stufen bekannt.

Aufgabe der vorliegenden Erfindung waren Bindemittel auf Basis von Acrylaten, welche bei der Verwendung in Papierstreichmassen eine verbesserte Naßrupffestigkeit bewirken bei ansonsten guter Trockenrupffestigkeit, gutem Glanz, Druckglanz und guter Bedruckbarkeit.

Demgemäß wurden die oben definierten Papierstreichmassen gefunden. Gefunden wurde auch ein Verfahren zur Herstellung von mit Papierstreichmassen beschichteten Papieren sowie die Verwendung der so erhältlichen Papiere für den Offsetdruck.

Die erfindungsgemäßen Papierstreichmassen enthalten ein Emulsionscopolymerisat, welches insgesamt aus
0 bis 60 Gew.-%, bevorzugt 0 bis 45 Gew.-% und besonders bevorzugt 10 bis 45 Gew.-% mindestens eines Vinylaromaten,
40 bis 95 Gew.-%, bevorzugt 40 bis 90 Gew.-% und besonders bevorzugt 40 bis 79 Gew.-% mindestens eines C₁- bis C₁₀-Alkyl (meth)acrylats,
5 bis 40 Gew.-%, bevorzugt 10 bis 30 Gew.-% mindestens eines Alkenylnitrils,
0 bis 10 Gew.-%, bevorzugt 0 bis 5 Gew.-% und besonders bevorzugt 0,5 bis 5 Gew.-% einer ethylenisch ungesättigten Säure und
0 bis 20 Gew.-%, bevorzugt 0 bis 10 Gew.-% weiteren Monomeren aufgebaut ist.

Die Gewichtsangaben sind jeweils auf das gesamte Emulsionscopolymerisat bezogen.

Als Vinylaromaten genannt seien z.B. α-Methylstyrol, p-Methylstyrol und vorzugsweise Styrol.

Bevorzugte C₁- bis C₁₀-Alkyl(meth)acrylate sind C₁- bis C₁₀-Alkylacrylate und C₄- bis C₁₀-Alkylmethacrylate. Besonders bevorzugt sind Alkylacrylate. Als ganz besonders bevorzugt genannt seien z.B. n-Butylacrylat, 2-Ethylhexylacrylat.

Bevorzugte Alkenylnitrile sind Acrylnitril und Methacrylnitril.

Bevorzugte ethylenisch ungesättigte Säuren sind Carbonsäuren und Dicarbonsäuren, z.B. Maleinsäure, Fumarsäure, Itaconsäure und vorzugsweise (Meth)acrylsäure.

Bei den weiteren Monomeren kann es sich z.B. um C₁- bis C₁₆-Hydroxyalkyl(meth)acrylate, Vinylether, Vinylester, wie Vinylacetat, ethylenisch ungesättigte Amide oder Anhydride, z.B. (Meth)acrylsäureamid oder Maleinsäureanhydrid handeln.

Konjugierte aliphatische Diene sind als weitere Monomere bevorzugt nur in Mengen von 0 bis 5 Gew.-% enthalten. Besonders bevorzugt enthält das Emulsionscopolymerisat keine konjugierten aliphatischen Diene, z.B. Butadien oder Isopren.

Das Emulsionscopolymerisat ist aus mindestens zwei, vorzugsweise zwei Stufen aufgebaut oder bei dem Emulsionscopolymerisat handelt es sich um ein Gemisch von mindestens zwei, vorzugsweise zwei Polymeren.

Hierbei ist eine Stufe bzw. ein Polymer reich an Alkenylnitril. Der Anteil der Alkenylnitril-reichen Stufe bzw. des Alkenylnitril-reichen Polymeren beträgt 75 bis 10 Gew.-%, bevorzugt 60 bis 25 Gew.-% und besonders bevorzugt 60 bis 40 Gew.-%, bezogen auf das Emulsionscopolymerisat.

Die Alkenylnitril-reiche Stufe bzw. das Alkenylnitril-reiche Polymer enthält mindestens 90, bevorzugt mindestens 95 Gew.-% und ganz besonders bevorzugt 100 Gew.-% des gesamten Alkenylnitrils.

Gegenüber einem Gemisch von Polymeren ist ein stufenförmig aufgebautes Emulsionscopolymerisat bevorzugt. Vorzugsweise ist die letzte, d.h. äußere Stufe (Schale) die Alkenylnitril-reiche Stufe.

Die Glasübergangstemperatur des gesamten Emulsionscopolymerisats unter Einbeziehung aller Monomeren der einzelnen Stufen oder Mischungskomponenten beträgt vorzugsweise -40 bis 60°C, besonders bevorzugt -20 bis 40°C, wobei die Glasübergangstemperatur nach T.G. Fox, Bull. Am. Phys. Soc. (Ser.II) 1, 123 (1956) berechnet wird.

Die Herstellung des Emulsionscopolymerisats erfolgt insbesondere durch Emulsionspolymerisation, vorzugsweise bei 30 bis 95°C in Gegenwart eines wasserlöslichen Initiators und eines Emulgators.

Geeignete Initiatoren sind z.B. Natrium-, Kalium- und Ammoniumpersulfat, tert.-Butylhydroperoxide, wasserlösliche Azoverbindungen oder auch Redoxinitiatoren.

Als Emulgatoren dienen z.B. Alkalisalze von längerkettigen Fettsäuren, Alkylsulfate, Alkylsufonate, alkylierte Arylsulfonate oder alkylierte Bisphenylethersulfonate. Desweiteren kommen als Emulgatoren Umsetzungsprodukte von Alkylenoxiden, insbesondere Ethylen- oder Propylenoxid mit Fettalkoholen, -säuren oder Phenol bzw. Alkylphenolen in Betracht.

Im Falle der Mischungen können die einzelnen Polymeren getrennt voneinander, insbesondere durch Emulsionspolymerisation hergestellt und anschließend in Form ihrer wäßrigen Dispersionen gemischt werden.

Im Falle des stufenförmig aufgebauten Emulsionscopolymerisats werden jeweils die Monomeren der folgenden Stufe in Gegenwart der bereits hergestellten Stufe polymerisiert.

Bei der Polymerisation in den einzelnen Stufen können die jeweiligen Monomerengemische der einzelnen Stufen auf einmal vorgelegt bzw. zugegeben werden; die Zugabe des Monomeren kann in den einzelnen Stufen aber auch im Zulaufverfahren, wobei gegebenenfalls ein Teil der Monomeren vorgelegt wird, erfolgen.

Mit der Polymerisation des Monomerengemischs einer Stufe wird erst begonnen, wenn der Restmonomerengehalt bei der Polymerisation der vorangegangenen Stufe vorzugsweise unter 10, besonders bevorzugt unter 5, ganz besonders bevorzugt unter 1 Gew.-%, bezogen auf das Monomerengemisch der vorangegangenen Stufe, liegt.

Der Feststoffgehalt der wäßrigen Dispersion des Emulsionscopolymerisats beträgt vorzugsweise 20 bis 70 Gew.-%. die Größe der Latexteilchen liegt vorzugsweise zwischen 80 und 350, besonders bevorzugt zwischen 80 und 250, ganz besonders bevorzugt zwischen 80 und 200 nm (gewichtsmittlerer Teilchendurchmesser, bestimmt mit der Ultrazentrifuge).

Die erfindungsgemäßen Papierstreichmassen enthalten die beanspruchten Emulsionscopolymerisate in Mengen von vorzugsweise 1 bis 20 Gew.-%, besonders bevorzugt 5 bis 15 Gew.-%, bezogen auf den Pigmentgehalt der Papierstreichmassen.

Üblicherweise stellen Pigmente die Hauptkomponente der Papierstreichmassen dar. Häufig verwendete Pigmente sind beispielsweise Bariumsulfat, Calciumcarbonat, Calciumsulfoaluminat, Kaolin, Talkum, Titandioxid, Zinkoxid, Kreide oder Streichclay.

Weiterhin können die Papierstreichmassen übliche Dispergiermittel enthalten. Geeignete Dispergiermittel sind Polyanionen, beispielsweise von Polyphosphorsäuren oder von Polyacrylsäuren (Polysalze), welche üblicherweise in Mengen von 0,1 bis 3 Gew.-%, bezogen auf die Pigmentemenge, enthalten sind.

Außerdem können die Papierstreichmassen sogenannte "Co-Binder" enthalten. Als natürliche Cobinder seien Stärke, Kasein, Gelatine und Alginate, als modifizierte Naturprodukte Hydroxyethylcellulose, Methylcellulose und Carboxymethylcellulose sowie kationisch modifizierte Stärke erwähnt. Es können aber auch übliche synthetische Cobinder, z.B. auf Vinylacetat- oder Acrylatbasis, verwendet werden.

Diese können in Mengen von z.B. 0,1 bis 10 Gew.-%, bezogen auf die Pigmentmenge, enthalten sein.

Die Papierstreichmassen können nach üblichen Verfahren auf die zu beschichtenden Papiere aufgebracht werden (vgl. Ullmann's Encyklopädie der Technischen Chemie, 4. Auflage, Bd. 17, S. 603ff).

Die so beschichteten Papiere zeigen beim anschließenden Bedruckprozeß im Offset-Druckverfahren, d.h. im Kontakt mit einem Druckfarbe/Wasser-System eine gute Bedruckbarkeit. Insbesondere ist die Naßrupffestigkeit deutlich verbessert.

### Beispiele

### Herstellung der Bindemittel

### Vergleichsbeispiel 1 (homogene Verteilung des Acrylnitrils)

### Vorlage:

9,3 g Natriumlaurylsulfat (15%ig in Wasser)
2,2 g Na-C₁₂-Alkyldiphenyletherdisulfat (45%ig in Wasser)
76,9 g des Zulauf 1
7,3 g des Zulauf 2
298,0 g vollentionisiertes Wasser

Zulauf 1:
   10,7 g Natriumlaurylsulfat (15%ig in Wasser)
   11,1 g Na-C₁₂-Alkyldiphenyletherdisulfat (45%ig in Wasser)
   66,7 g Na-Pyrophosphat (3%ig in Wasser)
   700,0 g n-Butylacrylat
   130,0 g Styrol
   150,0 g Acrylnitril
   20,0 g Acrylsäure
   450,0 g vollentionisiertes Wasser
Zulauf 2:
   5,0 g Natriumperoxidisulfat
   140,0 g vollentionisiertes Wasser
Zulauf 3:
   2,0 g Diammonium-eisen-(II)-sulfat (1%ig in Wasser)
Zulauf 4:
   20,0 g tert.-Butylhydroperoxid (10%ig in Wasser)
Zulauf 5:
   20,0 g Hydroxymethylsulfinsäure-Natriumsalz (10%ig in Wasser)
Zulauf 6:
   9,2 g Ammoniak (25%ig in Wasser)

Die Vorlage wurde ohne die Teilmenge von Zulauf 2 unter Stickstoff auf 85°C aufgeheizt. Bei 85°C wurde die Teilmenge des Zulauf 2 zugesetzt und 15 Minuten anpolymerisiert. Anschließend wurde bei 85°C während einer Zeitspanne von 2 Stunden der restliche Zulauf 1 und gleichzeitig mit Zulauf 1 beginnend, während einer Zeitspanne von 2,5 Stunden der restliche Zulauf 2 unter Rühren zugegeben. Das Reaktionsgemisch wurde anschließend noch 1 Stunde bei 85°C nachgerührt. Es wurde mit den Zuläufen 3 und 4 versetzt und beim Abkühlen auf 60°C Zulauf 5 in 1 Stunde dosiert. Es wurde 30 Minuten nachgerührt, auf 25°C abgekühlt und mit Zulauf 6 versetzt. Man erhielt eine Dispersion mit einem Feststoffgehalt von 49,5 % und einem pH-Wert von 6,8. Teilchengröße: 135 nm.

### Beispiel 1 (Acrylnitril nur in 2. Stufe des Polymeren)

### Vorlage:

9,3 g Natriumlaurylsulfat (15%ig in Wasser)
2,2 g Na-C₁₂-Alkyldiphenyletherdisulfat (45%ig in Wasser)
76,9 g des Zulauf 1
7,3 g des Zulauf 2
298,0 g vollentionisiertes Wasser

Zulauf 1:
   10,7 g Natriumlaurylsulfat (15%ig in Wasser)
   11,1 g Na-C₁₂-Alkyldiphenyletherdisulfat (45%ig in Wasser)
   66,7 g Na-Pyrophosphat (3%ig in Wasser)
   700,0 g n-Butylacrylat
   130,0 g Styrol
   20,0 g Acrylsäure
   450,0 g vollentionisiertes Wasser
Zulauf 2:
   5,0 g Natriumperoxidisulfat
   140,0 g vollentionisiertes Wasser
Zulauf 3:
   150,0 g Acrylnitril
Zulauf 4:
   2,0 g Diammonium-eisen-(II)-sulfat (1%ig in Wasser)
Zulauf 5:
   20,0 g tert.-Butylhydroperoxid (10%ig in Wasser)
Zulauf 6:
   20,0 g Hydroxymethylsulfinsäure-Natriumsalz (10%ig in Wasser)
Zulauf 7:
   9,2 g Ammoniak (25%ig in Wasser)

Die Vorlage wurde ohne die Teilmenge von Zulauf 2 unter Stickstoff auf 85°C aufgeheizt. Bei 85°C wurde die Teilmenge des Zulauf 2 zugesetzt und 15 Minuten anpolymerisiert. Anschließend wurde bei 85°C während einer Zeitspanne von 2 Stunden der restliche Zulauf 1 und gleichzeitig mit Zulauf 1 beginnend, während einer Zeitspanne von 2,5 Stunden der restliche Zulauf 2 unter Rühren zugegeben. Eine Stunde nach dem Start der Zuläufe 1 und 2 wurde der Zulauf 3 innerhalb einer Stunde zudosiert. Das Reaktionsgemisch wurde anschließend noch 1 Stunde bei 85°C nachgerührt. Es wurde mit den Zuläufen 4 und 5 versetzt und beim Abkühlen auf 60°C Zulauf 6 in 1 Stunde dosiert. Es wurde 30 Minuten nachgerührt, auf 25°C abgekühlt und mit Zulauf 7 versetzt. Man erhielt eine Dispersion mit einem Feststoffgehalt von 49,1 % und einem pH-Wert von 6,9. Teilchengröße: 139 nm.

### Beispiel 2 (Polymer ohne Acrylnitril für Abmischung)

### Vorlage:

9,3 g Natriumlaurylsulfat (15%ig in Wasser)
2,2 g Na-C₁₂-Alkyldiphenyletherdisulfat (45%ig in Wasser)
76,9 g des Zulauf 1
7,3 g des Zulauf 2
298,0 g vollentionisiertes Wasser

Zulauf 1:
   10.7 g Natriumlaurylsulfat (15%ig in Wasser)
   11,1 g Na-C₁₂-Alkyldiphenyletherdisulfat (45%ig in Wasser)
   66,7 g Na-Pyrophosphat (3%ig in Wasser)
   823,5 g n-Butylacrylat
   153,0 g Styrol
   23,5 g Acrylsäure
   450,0 g vollentionisiertes Wasser
Zulauf 2:
   5,0 g Natriumperoxidisulfat
   140,0 g vollentionisiertes Wasser
Zulauf 3:
   2,0 g Diammonium-eisen-(II)-sulfat (1%ig in Wasser)
Zulauf 4:
   20,0 g tert.-Butylhydroperoxid (10%ig in Wasser)
Zulauf 5:
   20,0 g Hydroxymethylsulfinsäure-Natriumsalz (10%ig in Wasser)
Zulauf 6:
   9,2 g Ammoniak (25%ig in Wasser)

Die Vorlage wurde ohne die Teilmenge von Zulauf 2 unter Stickstoff auf 85°C aufgeheizt. Bei 85°C wurde die Teilmenge des Zulauf 2 zugesetzt und 15 Minuten anpolymerisiert. Anschließend wurde bei 85°C während einer Zeitspanne von 2 Stunden der restliche Zulauf 1 und gleichzeitig mit Zulauf 1 beginnend, während einer Zeitspanne von 2,5 Stunden der restliche Zulauf 2 unter Rühren zugegeben. Das Reaktionsgemisch wurde anschließend noch 1 Stunde bei 85°C nachgerührt. Es wurde mit den Zuläufen 3 und 4 versetzt und beim Abkühlen auf 60°C Zulauf 5 in 1 Stunde dosiert. Es wurde 30 Minuten nachgerührt, auf 25°C abgekühlt und mit Zulauf 6 versetzt. Man erhielt eine Dispersion mit einem Feststoffgehalt von 49,6 % und einem pH-Wert von 5,9. Teilchengröße: 132 nm.

### Beispiel 3 (Polymer mit Acrylnitril für Abmischung)

### Vorlage:

9,3 g Natriumlaurylsulfat (15%ig in Wasser)
2,2 g Na-C₁₂-Alkyldiphenyletherdisulfat (45%ig in Wasser)
76,9 g des Zulauf 1
7,3 g des Zulauf 2
298,0 g vollentionisiertes Wasser

Zulauf 1:
   10,7 g Natriumlaurylsulfat (15%ig in Wasser)
   11,1 g Na-C₁₂-Alkyldiphenyletherdisulfat (45%ig in Wasser)
   66,7 g Na-Pyrophosphat (3%ig in Wasser)
   608,7 g n-Butylacrylat
   113,0 g Styrol
   260,9 g Acrylnitril
   17,4 g Acrylsäure
   450,0 g vollentionisiertes Wasser
Zulauf 2:
   5,0 g Natriumperoxidisulfat
   140,0 g vollentionisiertes Wasser
Zulauf 3:
   2,0 g Diammonium-eisen-(II)-sulfat (1%ig in Wasser)
Zulauf 4:
   20,0 g tert.-Butylhydroperoxid (10%ig in Wasser)
Zulauf 5:
   20,0 g Hydroxymethylsulfinsäure-Natriumsalz (10%ig in Wasser)
Zulauf 6:
   9,2 g Ammoniak (25%ig in Wasser)

Die Vorlage wurde ohne die Teilmenge von Zulauf 2 unter Stickstoff auf 85°C aufgeheizt. Bei 85°C wurde die Teilmenge des Zulauf 2 zugesetzt und 15 Minuten anpolymerisiert. Anschließend wurde bei 85°C während einer Zeitspanne von 2 Stunden der restliche Zulauf 1 und gleichzeitig mit Zulauf 1 beginnend, während einer Zeitspanne von 2,5 Stunden der restliche Zulauf 2 unter Rühren zugegeben. Das Reaktionsgemisch wurde anschließend noch 1 Stunde bei 85°C nachgerührt. Es wurde mit den Zuläufen 3 und 4 versetzt und beim Abkühlen auf 60°C Zulauf 5 in 1 Stunde dosiert. Es wurde 30 Minuten nachgerührt, auf 25°C abgekühlt und mit Zulauf 6 versetzt. Man erhielt eine Dispersion mit einem Feststoffgehalt von 49,3 % und einem pH-Wert von 7,4. Teilchengröße: 136 nm.

### Vergleichsbeispiel 2 (homogene Verteilung des Acrylnitrils)

### Vorlage:

9,3 g Natriumlaurylsulfat (15%ig in Wasser)
2,2 g Na-C₁₂-Alkyldiphenyletherdisulfat (45%ig in Wasser)
76,9 g des Zulauf 1
7,3 g des Zulauf 2
298,0 g vollentionisiertes Wasser

Zulauf 1:
   10.7 g Natriumlaurylsulfat (15%ig in Wasser)
   11,1 g Na-C₁₂-Alkyldiphenyletherdisulfat (45%ig in Wasser)
   66,7 g Na-Pyrophosphat (3%ig in Wasser)
   600,0 g n-Butylacrylat
   200,0 g Styrol
   180,0 g Acrylnitril
   20,0 g Acrylsäure
   450,0 g vollentionisiertes Wasser
Zulauf 2:
   5,0 g Natriumperoxidisulfat
   140,0 g vollentionisiertes Wasser
Zulauf 3:
   2,0 g Diammonium-eisen-(II)-sulfat (1%ig in Wasser)
Zulauf 4:
   20,0 g tert.-Butylhydroperoxid (10%ig in Wasser)
Zulauf 5:
   20,0 g Hydroxymethylsulfinsäure-Natriumsalz (10%ig in Wasser)
Zulauf 6:
   9,2 g Ammoniak (25%ig in Wasser)

Die Vorlage wurde ohne die Teilmenge von Zulauf 2 unter Stickstoff auf 85°C aufgeheizt. Bei 85°C wurde die Teilmenge des Zulauf 2 zugesetzt und 15 Minuten anpolymerisiert. Anschließend wurde bei 85°C während einer Zeitspanne von 2 Stunden der restliche Zulauf 1 und gleichzeitig mit Zulauf 1 beginnend, während einer Zeitspanne von 2,5 Stunden der restliche Zulauf 2 unter Rühren zugegeben. Das Reaktionsgemisch wurde anschließend noch 1 Stunde bei 85°C nachgerührt. Es wurde mit den Zuläufen 3 und 4 versetzt und beim Abkühlen auf 60°C Zulauf 5 in 1 Stunde dosiert. Es wurde 30 Minuten nachgerührt, auf 25°C abgekühlt und mit Zulauf 6 versetzt. Man erhielt eine Dispersion mit einem Feststoffgehalt von 49,6 % und einem pH-Wert von 6,8. Teilchengröße: 149 nm.

### Beispiel 4 (Acrylnitril nur in 2. Stufe des Polymeren)

### Vorlage:

9,3 g Natriumlaurylsulfat (15%ig in Wasser)
2,2 g Na-C₁₂-Alkyldiphenyletherdisulfat (45%ig in Wasser)
76,9 g des Zulauf 1
7,3 g des Zulauf 2
298,0 g vollentionisiertes Wasser

Zulauf 1:
   10.7 g Natriumlaurylsulfat (15%ig in Wasser)
   11,1 g Na-C₁₂-Alkyldiphenyletherdisulfat (45%ig in Wasser)
   66,7 g Na-Pyrophosphat (3%ig in Wasser)
   600,0 g n-Butylacrylat
   200,0 g Styrol
   20,0 g Acrylsäure
   450,0 g vollentionisiertes Wasser
Zulauf 2:
   5,0 g Natriumperoxidisulfat
   140,0 g vollentionisiertes Wasser
Zulauf 3:
   180,0 g Acrylnitril
Zulauf 4:
   2,0 g Diammonium-eisen-(II)-sulfat (1%ig in Wasser)
Zulauf 5:
   20,0 g tert.-Butylhydroperoxid (10%ig in Wasser)
Zulauf 6:
   20,0 g Hydroxymethylsulfinsäure-Natriumsalz (10%ig in Wasser)
Zulauf 7:
   9,2 g Ammoniak (25%ig in Wasser)

Die Vorlage wurde ohne die Teilmenge von Zulauf 2 unter Stickstoff auf 85°C aufgeheizt. Bei 85°C wurde die Teilmenge des Zulauf 2 zugesetzt und 15 Minuten anpolymerisiert. Anschließend wurde bei 85°C während einer Zeitspanne von 2 Stunden der restliche Zulauf 1 und gleichzeitig mit Zulauf 1 beginnend, während einer Zeitspanne von 2,5 Stunden der restliche Zulauf 2 unter Rühren zugegeben. Eine Stunde nach dem Start der Zuläufe 1 und 2 wurde der Zulauf 3 innerhalb einer Stunde zudosiert. Das Reaktionsgemisch wurde anschließend noch 1 Stunde bei 85°C nachgerührt. Es wurde mit den Zuläufen 4 und 5 versetzt und beim Abkühlen auf 60°C Zulauf 6 in 1 Stunde dosiert. Es wurde 30 Minuten nachgerührt, auf 25°C abgekühlt und mit Zulauf 7 versetzt. Man erhielt eine Dispersion mit einem Feststoffgehalt von 49,3 % und einem pH-Wert von 6,8. Teilchengröße: 145 nm.

### Beispiel 5 (für Abmischung Polymer ohne Acrylnitril)

### Vorlage:

9,3 g Natriumlaurylsulfat (15%ig in Wasser)
2,2 g Na-C₁₂-Alkyldiphenyletherdisulfat (45%ig in Wasser)
76,9 g des Zulauf 1
7,3 g des Zulauf 2
298,0 g vollentionisiertes Wasser

Zulauf 1:
   10.7 g Natriumlaurylsulfat (15%ig in Wasser)
   11,1 g Na-C₁₂-Alkyldiphenyletherdisulfat (45%ig in Wasser)
   66,7 g Na-Pyrophosphat (3%ig in Wasser)
   731,7 g n-Butylacrylat
   243,9 g Styrol
   24,4 g Acrylsäure
   450,0 g vollentionisiertes Wasser
Zulauf 2:
   5,0 g Natriumperoxidisulfat
   140,0 g vollentionisiertes Wasser
Zulauf 3:
   2,0 g Diammonium-eisen-(II)-sulfat (1%ig in Wasser)
Zulauf 4:
   20,0 g tert.-Butylhydroperoxid (10%ig in Wasser)
Zulauf 5:
   20,0 g Hydroxymethylsulfinsäure-Natriumsalz (10%ig in Wasser)
Zulauf 6:
   9,2 g Ammoniak (25%ig in Wasser)

Die Vorlage wurde ohne die Teilmenge von Zulauf 2 unter Stickstoff auf 85°C aufgeheizt. Bei 85°C wurde die Teilmenge des Zulauf 2 zugesetzt und 15 Minuten anpolymerisiert. Anschließend wurde bei 85°C während einer Zeitspanne von 2 Stunden der restliche Zulauf 1 und gleichzeitig mit Zulauf 1 beginnend, während einer Zeitspanne von 2,5 Stunden der restliche Zulauf 2 unter Rühren zugegeben. Das Reaktionsgemisch wurde anschließend noch 1 Stunde bei 85°C nachgerührt. Es wurde mit den Zuläufen 3 und 4 versetzt und beim Abkühlen auf 60°C Zulauf 5 in 1 Stunde dosiert. Es wurde 30 Minuten nachgerührt, auf 25°C abgekühlt und mit Zulauf 6 versetzt. Man erhielt eine Dispersion mit einem Feststoffgehalt von 49,6 % und einem pH-Wert von 6,0. Teilchengröße: 133 nm.

### Beispiel 6 (Polymer mit Acrylnitril für Abmischung)

### Vorlage:

9,3 g Natriumlaurylsulfat (15%ig in Wasser)
2,2 g Na-C₁₂-Alkyldiphenyletherdisulfat (45%ig in Wasser)
76,9 g des Zulauf 1
7,3 g des Zulauf 2
298,0 g vollentionisiertes Wasser

Zulauf 1:
   10,7 g Natriumlaurylsulfat (15%ig in Wasser)
   11,1 g Na-C₁₂-Alkyldiphenyletherdisulfat (45%ig in Wasser)
   66,7 g Na-Pyrophosphat (3%ig in Wasser)
   508,5 g n-Butylacrylat
   169,5 g Styrol
   305,1 g Acrylnitril
   16,9 g Acrylsäure
   450,0 g vollentionisiertes Wasser
Zulauf 2:
   5,0 g Natriumperoxidisulfat
   140,0 g vollentionisiertes Wasser
Zulauf 3:
   2,0 g Diammonium-eisen-(II)-sulfat (1%ig in Wasser)
Zulauf 4:
   20,0 g tert.-Butylhydroperoxid (10%ig in Wasser)
Zulauf 5:
   20,0 g Hydroxymethylsulfinsäure-Natriumsalz (10%ig in Wasser)
Zulauf 6:
   9,2 g Ammoniak (25%ig in Wasser)

Die Vorlage wurde ohne die Teilmenge von Zulauf 2 unter Stickstoff auf 85°C aufgeheizt. Bei 85°C wurde die Teilmenge des Zulauf 2 zugesetzt und 15 Minuten anpolymerisiert. Anschließend wurde bei 85°C während einer Zeitspanne von 2 Stunden der restliche Zulauf 1 und gleichzeitig mit Zulauf 1 beginnend, während einer Zeitspanne von 2,5 Stunden der restliche Zulauf 2 unter Rühren zugegeben. Das Reaktionsgemisch wurde anschließend noch 1 Stunde bei 85°C nachgerührt. Es wurde mit den Zuläufen 3 und 4 versetzt und beim Abkühlen auf 60°C Zulauf 5 in 1 Stunde dosiert. Es wurde 30 Minuten nachgerührt, auf 25°C abgekühlt und mit Zulauf 6 versetzt. Man erhielt eine Dispersion mit einem Feststoffgehalt von 49,5 % und einem pH-Wert von 7,5. Teilchengröße: 138 nm.

### Herstellung der Papierstreichmassen

Die Bindemittel aus den Beispielen 1 und 4 Mischungen aus den Beispielen 2 und 3 bzw. 5 und 6 sowie Bindemittel aus den Vergleichsbeispielen 1 und 2 wurden in einer Papierstreichmasse der folgenden Zusammensetzung verwendet:
70,0 Gew.-Teile feinteilige Kreide
30,0 Gew.-Teile feinteiliger Clay
0,5 Gew.-Teile Carboxymethylcellulose
0,4 Gew.-Teile eines Natriumsalzes einer Polyacrylsäure mit einem Molekulargewicht von 4000 (Polysalz S BASF)
0,05 Gew.-Teile Natriumhydroxid
12,0 Gew.-Teile Bindemittel (fest) aus den Beispielen.

Der Feststoffgehalt wurde mit Wasser auf 65 Gew.-% eingestellt (pH-Wert 8,5 - 9,0).

### Anwendungstechnische Prüfung

Als Rohpapier wurde ein holzfreies Streichrohpapier mit einem Flächengewicht von 70 g/m² verwendet. Der Auftrag der Papierstreichmasse erfolgte einseitig mit 10 g/m² auf einer Laborstreichmaschine (Dosierverfahren: Blade). Die Trocknung erfolgte mit einem IR-Strahler. Die Papiere passierten vor den anwendungstechnischen Prüfungen viermal einen Laborkalander (ein Walzenpaar, Liniendruck: 2000 N/cm).

### Trockenrupffestigkeit

Aus den zu prüfenden Papieren wurden Streifen in der Größe 33 x 3 cm in Längsrichtung geschnitten und diese Streifen 15 Stunden bei 27°C mit einer relativen Luftfeuchtigkeit von 50 % im Klimaraum gelagert.

Die Streifen wurden anschließend in einem Druckwerk (IGT Bedruckbarkeitsprüfer AC2/AIC2) mit einer Standardfarbe (Druckfarbe 3808 der Fa. Lorilleux-Lefranc) bedruckt.

Die Prüfstreifen werden mit kontinuierlich steigender Geschwindigkeit (maximale Geschwindigkeit 200 cm/sec) durch das Druckwerk geführt. Als Maß für die Trockenrupffestigkeit wird die Geschwindigkeit in cm/sec angegeben, bei der nach Druckbeginn 10 Ausrisse aus der Papierstreichmasse (Rupfpunkte) erfolgt sind.

### Naßrupffestigkeit

Die Prüfstreifen wurden wie oben beschrieben hergestellt und vorbereitet.

Das Druckwerk (IGT Bedruckbarkeitsprüfer AC2/AIC2) wurde so eingerichtet, daß die Prüfstreifen vor dem Druckvorgang mit Wasser befeuchtet werden.

Der Druck wurde mit einer konstanten Geschwindigkeit von 0,6 cm/s durchgeführt.

Ausrisse aus der Papierstreichmasse bzw. dem Papier sind als unbedruckte Stellen sichtbar. Zur Bestimmung der Naßrupffestigkeit wird daher mit einem Farbdensitometer die Farbdichte im Vergleich zum vollen Farbton in % bestimmt.

### Papierglanz

Der Glanz der unbedruckten Prüfpapiere wurde mit einem Glanzmeßgerät (Lehmann LGDL-05) in einem Winkel von 45° bestimmt. Die Angabe erfolgt in %, bezogen auf die eingestrahlte Lichtintensität.

### Druckglanz

Der Druckglanz wurde an bedruckten Prüfpapieren wie oben beschrieben in einem Winkel von 75° bestimmt.

Die Ergebnisse sind in der nachstehenden Tabelle aufgeführt.

| | Bindemittel aus | Trockenrupffestigkeit cm/s | Naßrupffestigkeit % | Druckglanz % | Papierglanz % |
|---|---|---|---|---|---|
| I | Vergleichsbeispiel 1 | 60 | 16,3 | 29,7 | 43,6 |
| II | Beispiel 1 | 61 | 38,2 | 28,3 | 43,8 |
| III | Beispiel 2/3 (42,5/57,5 Gew.%)* | 63 | 32,1 | 30,9 | 43,8 |
| IV | Vergleichsbeispiel 2 | 72 | 29,6 | 27,6 | 42,0 |
| V | Beispiel 4 | 62 | 40,6 | 25,5 | 41,6 |
| VI | Beispiel 5/6 (41,0/59,0 Gew.%)* | 67 | 37,6 | 28,7 | 41,5 |

| | | | | | |
|---|---|---|---|---|---|
| * Gew.-% der Bindemittel (fest) | | | | | |

### Anmerkung:

Die Brutto-Polymerzusammensetzung und der Acrylnitrilgehalt in I bis III und IV bis VI sind jeweils gleich.

## Patentansprüche

1. Papierstreichmassen, enthaltend ein Emulsionscopolymerisat, insgesamt aufgebaut aus
0 bis 60 Gew.-% eines Vinylaromaten,
40 bis 95 Gew.-% eines C₁- bis C₁₀-Alkyl(meth)acrylats,
5 bis 40 Gew.-% eines Alkenylnitrils,
0 bis 10 Gew.-% einer ethylenisch ungesättigten Säure und
0 bis 20 Gew.-% weiterer Monomere
als Bindemittel, dadurch gekennzeichnet, daß es sich bei dem Emulsionscopolymerisat um ein Gemisch aus mindestens zwei Polymeren oder um ein aus mindestens zwei Stufen aufgebautes Emulsionscopolymerisat handelt, wobei ein Polymer bzw. eine Stufe, dessen bzw. deren Anteil am Emulsionscopolymerisat 10 bis 75 Gew.-% beträgt, mindestens 90 Gew.-% des gesamten Alkenylnitrils (Alkenylnitril-reiches Polymer bzw. Stufe) enthält.

2. Papierstreichmassen gemäß Anspruch 1, dadurch gekennzeichnet, daß der Anteil des Alkenylnitril-reichen Polymeren oder der Alkenylnitril-reichen Stufe 60 bis 25 Gew.-%, bezogen auf das Emulsionscopolymerisat, beträgt.

3. Papierstreichmassen gemäß Anspruch 1 oder 2, dadurch gekennzeichnet, daß das Emulsionscopolymerisat aus mindestens zwei Stufen aufgebaut ist, wobei die äußere Stufe des Emulsionscopolymerisats die Alkenylnitril-reiche Stufe ist.

4. Verfahren zur Herstellung von mit Papierstreichmassen beschichteten Papieren, dadurch gekennzeichnet, daß Papiere mit einer Papierstreichmasse gemäß einem der Ansprüche 1 bis 3 beschichtet werden.

5. Mit Papierstreichmassen beschichtete Papiere erhältlich durch ein Verfahren gemäß Anspruch 4.

6. Verwendung von beschichteten Papieren gemäß Anspruch 5 für den Offsetdruck.

## Claims

1. A paper coating slip containing an emulsion copolymer, comprising overall
from 0 to 60% by weight of a vinylaromatic,
from 40 to 95% by weight of a C₁-C₁₀-alkyl (meth)acrylate,
from 5 to 40% by weight of an alkenylnitrile,
from 0 to 10% by weight of an ethylenically unsaturated acid and
from 0 to 20% by weight of further monomers
as a binder, wherein the emulsion copolymer is a mixture of at least two polymers or an emulsion copolymer comprising at least two stages, one polymer or one stage whose content in the emulsion copolymer is from 10 to 75% by weight containing at least 90% by weight of the total amount of alkenylnitrile (alkenylnitrile-rich polymer or stage).

2. A paper coating slip as claimed in claim 1, wherein the amount of the alkenylnitrile-rich polymer or of the alkenylnitrile-rich stage is from 60 to 25% by weight, based on the emulsion copolymer.

3. A paper coating slip as claimed in claim 1 or 2, wherein the emulsion copolymer comprises at least two stages, the outer stage of the emulsion copolymer being the alkenylnitrile-rich stage.

4. A process for the production of a paper coated with a paper coating slip, wherein the paper is coated with a paper coating slip as claimed in any of claims 1 to 3.

5. A paper coated with a paper coating slip and obtainable by a process as claimed in claim 4.

6. The use of a coated paper as claimed in claim 5 for offset printing.

## Revendications

1. Sauces de couchage du papier, contenant un copolymère en émulsion comprenant globalement, en tant que liant :
de 0 à 60 % en poids d'un composé vinylaromatique,
de 40 à 95 % en poids d'un (méth)acrylate d'alkyle en C₁ à C₁₀,
de 5 à 40 % en poids d'un alcénylnitrile,
de 0 à 10 % en poids d'un acide à insaturation éthylénique, et
de 0 à 20 % en poids d'autres monomères,
caractérisées en ce que, pour ce qui concerne le copolymère en émulsion, il s'agit d'un mélange d'au moins deux polymères ou d'un copolymère en émulsion constitué d'au moins deux étages, où un polymère ou un étage dans lequel la proportion du copolymère en émulsion est de 10 à 75 % en poids contient au moins 90 % en poids de la totalité de l'alcénylnitrile (polymère ou étage riche en alcénylnitrile).

2. Sauces de couchage pour papier selon la revendication 1, caractérisées en ce que la proportion du polymère riche en alcénylnitrile ou de l'étage riche en alcénylnitrile est de 60 à 25 % en poids par rapport au copolymère en émulsion.

3. Sauces de couchage pour papier selon la revendication 1 ou 2, caractérisées en ce que le copolymère en émulsion est constitué d'au moins deux étages, l'étage extérieur du copolymère en émulsion étant l'étage riche en alcénylnitrile.

4. Procédé de fabrication de papiers enduits de sauces de couchage pour papier, caractérisé en ce qu'on enduit des papiers avec une sauce de couchage selon l'une des revendications 1 à 3.

5. Papiers enduits de sauces de couchage, pouvant être obtenus par un procédé selon la revendication 4.

6. Utilisation de papiers enduits selon la revendication 5, pour l'impression offset.
